(19) **Europäisches Patentamt / European Patent Office / Office européen des brevets**

(11) **EP 4 145 654 A1**

(12) **EUROPEAN PATENT APPLICATION**

(43) Date of publication:
**08.03.2023 Bulletin 2023/10**

(21) Application number: **21382794.2**

(22) Date of filing: **03.09.2021**

(51) International Patent Classification (IPC):
**H02H 3/16** *(2006.01)*     **H02H 9/08** *(2006.01)*

(52) Cooperative Patent Classification (CPC):
**H02H 3/162; H02H 9/08**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **I-De Redes Eléctricas Inteligentes, S.A.**
**48003 Bilbao (ES)**

(72) Inventor: **PAZOS FILGUEIRA, Francisco José**
**48003 Bilbao (ES)**

(74) Representative: **Pons**
**Glorieta Rubén Darío 4**
**28010 Madrid (ES)**

Remarks:
Amended claims in accordance with Rule 137(2) EPC.

(54) **FAULT EXTINGUISHING AND PREDICTIVE MAINTENANCE DEVICE FOR HIGH VOLTAGE NETWORKS**

(57)     The device is intended to be connected to the phases of a high-voltage network (1), being able to independently regulate the three voltages of the three phases and detect insulation faults. It comprises at least one voltage capture element and one current capture element (2) for each phase of the high-voltage network (1), a protection and control module (4), connected to the voltage and current capture elements (2), a three-phase power converter (3), associated with the protection and control module (4), with three branches with independent voltage control intended to be connected to the phases of the high-voltage network (1), a power supply module (6) of the three-phase converter (3) and a dedicated transformer (5), connected to the regulation and control module (2).

**Description**

**OBJECT OF THE INVENTION**

It is an electronic device for fault extinction and predictive maintenance in high-voltage three-phase distribution networks (voltage greater than 1kV), by means of a three-phase converter capable of independently regulating the three voltages of the three phases. The device also has a maintenance mode that enables insulation faults to be detected in the medium voltage network.

**BACKGROUND OF THE INVENTION**

Supply interruptions have a negative effect on the way in which the end user perceives the quality of the energy supplied to them. For this reason, electricity companies are required to supply said energy with a high level of quality to ensure a fault-free operation of high-tech equipment.

Among the different causes of power interruption, electrical faults occupy a very prominent place. According to statistical data from electricity companies, most of the failures that occur in power systems are single-phase ground faults, due to different causes: trees and birds coming into contact with the lines, insulation failures, conductor breakage, pollution from industrial activities or saline deposits in coastal areas, acts of vandalism, etc.

Traditionally, the minimisation of faults has been addressed through the treatment of the neutral of the transformers of the distribution substations, which has great influence on the operation of the network, protection criteria of the networks and, therefore, on the quality of supply. Said treatment of the neutral is a subject of ongoing research in order to best cover the requirements of modern systems. Due to technical and legal aspects, the grounding method has evolved differently in different countries.

The different basic technologies applied to the neutral grounding method can be summarised in the following three:

- Grounding through an impedance: The zero sequence impedance thus inserted can be given a value so as to limit the short-circuit current, the line voltage drop, and the overvoltages in the healthy phases to predetermined values. To do this, various degrees of grounding are used, from rigid or effectively grounded to high impedance.
- Isolated grounding: It is a system with no intentional grounding, except through voltage indicators, measuring devices or other very high impedance equipment. Although called isolated, this system is actually coupled to ground through the distributed capacitance of the phase windings and conductors thereof. Under normal conditions, the neutral of an isolated system with balanced loads will be close to ground potential, thus maintaining the balanced capacity between each phase conductor and ground.
- Compensated or resonant grounding: A resonantly grounded system is one in which the capacitive fault current caused by the admittances that exist between the system and ground is neutralised or compensated by an inductive current of equal value. This inductive current is generated by means of a reactance called compensation coil or arc extinguishing coil or ground fault neutraliser or Petersen coil. This type of reactance incorporates, in some cases, a motor or a manual control that enables the value thereof to be adjusted according to the needs of network operation.

The compensated grounding method starts from the premise that when the fault current that circulates is of a sufficiently low value there is a high probability that, in the event of it being transient, it will self-extinguish. Starting from this premise, the main advantage of this type of grounding lies in the reduction of the current flow in single-phase ground faults, such that the fault can be extinguished without interruption of the electrical supply, as long as it is not permanent.

Currently the device used for compensated grounding is the Petersen coil. Based on this solution, different alternatives have been devised which, using the same idea of grounding by means of an inductance, have tried to improve some of the features of the aforementioned solution, especially regarding the tuning of the coil.

One of the alternatives uses an adjustable inductance, making it possible to tune it (with a limited range) depending on changes in the topology of the network by means of a manual control or a motor that, acting on the magnetic core, enables the inductance value to be modified.

Another improvement for the tuning of the Petersen coil is obtained from the application of the calculation defined in patent document DE10307668B3, in which causing the circulation of two simultaneous currents with two different frequencies through the neutral, values of currents and voltages are obtained that allow the calculation of the capacity of the network in which the coil is installed and, therefore, to tune the grounded inductance according thereto, i.e., the injection of current into the network is used in order to have measures that enable a passive element (Petersen coil) that will be responsible for extinguishing the faults of the system to be tuned.

In any case, traditionally proposed solutions propose control modifications centred on a passive system, which do not alter the operating principle of the Petersen coil for extinguishing transient single-phase faults in the electrical system.

A coil, as a passive system, causes a forced neutral current circulation depending on the impedance that it exhibits and the voltage that appears at the terminals thereof as a consequence of a ground fault or an imbalance between the phases. Therefore, a passive system has no capacity whatsoever to vary the circulation of the neutral current at will, but rather it is imposed by the network itself and the situation thereof.

In other words, the main drawbacks of using a passive system can be summarised as:

- current circulation in the neutral and in the fault is dependent on the neutral voltage that appears in the system,
- it is not possible to control the neutral current of the network neither in module, nor in angle, nor in frequency components, and
- it does not allow to control the overvoltage that is generated in the neutral of the system.

In addition, its use involves a limitation when performing a series of functions:

- difficulty in locating the malfunction or fault,
- due to the fact that the compensation is carried out through an impedance in the neutral that does not enable tuning based on the imbalances of each phase, higher symmetry requirements are imposed on the phase-ground capacities,
- high impedance faults are difficult to detect due to the low current circulating through the fault when the system grounding is compensated, and
- a rapid extinction of the fault, in the event that it is transient, limits the possibilities of detecting and locating the same, so that once it is extinguished it will no longer be possible to obtain any more information in relation thereto.

Additionally, compensated groundings do not allow the total extinction of permanent faults, those faults caused by malfunctions in the network. In these cases, a fault current permanently circulates at the point of the malfunction, which can cause dangerous step and contact voltages. This condition is permitted for limited periods that depend on the electrotechnical regulations of each country, ranging from one second, in the case of Spain, to periods of a few hours in other European countries, being able to be conditioned to the impedance of the fault.

This means that in the event of permanent faults, the line trip is required, with the consequent loss of supply to the customers supplied from the affected line.

This operation was overcome by patent document ES2538455T3 of the same inventor (Francisco Jose Pazos) consisting of an active electronic grounding system in high-voltage distribution networks for extinguishing transient single-phase faults.

It is a single-phase electronic converter that is connected to the neutral of the secondary of the substation transformer, modifying the grounding system. The operating principle thereof is to act on the current circulation therein, controlling it at all times. Therefore, this control enables the desired zero sequence current to be obtained at the desired moment, a feature that the system takes advantage of to perform a series of functions, such as the extinction of transient faults to ground in the network by means of the injection of current.

Likewise, this system enables a controlled neutral voltage to be obtained during the time required by the user and thus helps corrective maintenance and enables preventive and predictive maintenance of overhead lines and high-voltage electrical distribution cables by checking the insulation of the electric system.

The control and protection system thereof is based on the injection of zero sequence currents with frequency components the injection of which enables more precise measurements to be obtained.

However, since these are zero-sequence currents with equipment connection to the transformer's neutral, none of the aforementioned systems enables the voltage supplied to the network to be controlled or faults between phases to be extinguished.

## DESCRIPTION OF THE INVENTION

The object of the present invention is an electronic device for fault extinction and predictive maintenance in high-voltage networks, capable of independent control in each of the phases, and that extinguishes faults to ground and some faults between phases, in case of failure, and test the insulations of a high-voltage network for maintenance work.

In particular, the device of the invention is intended to be connected to a three-phase high-voltage network, and comprises, firstly, at least one voltage capture element and at least one current capture element for each phase of the high-voltage network, said voltage and current capture elements being intended to be connected to the phases of the high-voltage network to obtain one or more of the following measurements:

- V1, V2 and V3: phase to ground voltages on the HV side.
- I1, I2 and I3: phase currents on the HV side

- IN: neutral current on the HV side

The voltage and current capture elements can be conventional voltage transformers and current transformers or other equivalent sensors.

Connected to the voltage and current capture elements, the device comprises a protection and control module, which receives at least some of the captured quantities (V1, V2, V3, I1, I2, I3 and IN). The protection and control module is preferably an IED (Intelligent Electronic Device) which can be, for example, a digital relay or an equivalent processing system, capable of receiving at least some of the captured quantities. Alternatively, the protection and control module can be, for example, an industrial computer with data acquisition cards.

Furthermore, the device comprises a three-phase power converter, such as a converter made up of IGBT transistors or other electronic switching technologies. The three-phase converter comprises a neutral point, which may or may not be grounded, and three branches with independent control intended to be connected to the phases of the high-voltage network.

The three-phase converter is also linked to the protection and control module, and operates as a voltage source, with the output thereof supplying the high-voltage network. The three-phase converter is configured to generate three voltages the values of which can be independent, said values being calculated by the protection and control module. Furthermore, the three-phase converter may comprise a current limiting module.

Unlike the active grounding system of the state of the art, which controlled the injection current, with the device of the present invention, and particularly with the three-phase converter, fault extinction or predictive maintenance is done by controlling the voltage, independently for each of the three phases thereof, which implies an injection of zero sequence voltage to the network, in addition to the direct sequence with which the supply to the network is maintained. Therefore, the device is not based on the zero sequence impedance of the network, which depends on the capacitive impedance, which does affect the extinguishing systems that act on the grounding.

This direct sequence control enables voltage to be reduced in the event of three-phase faults. As it has voltage control per phase, it can also inject reverse sequence in order to, in this case, control the voltage between two phases, which enables faults in two-phase faults to be extinguished. These direct sequence and reverse sequence controls for fault control are a novelty, as they are impossible with grounding systems, both conventional and active.

Connected to the three-phase converters, the device comprises a power supply module for the three-phase power converter, which can consist of:

- a converter that acts as a rectifier, when the power supply is alternating current,
- an energy storage module, either batteries or other.

Finally, the device comprises a dedicated transformer, with a high-voltage side (HV) and a low voltage side (LV), and with a Ynyn connection group, to which additional windings can be added, with the neutral connected to ground on the HV side, either permanently or in a controlled way by means of a switch, and with the LV side connected to the neutral of the three-phase power converter. The dedicated transformer is associated with the protection and control module, and comprises a load cut-off element. Additionally, the transformer can have on-load voltage regulation by means of an electromechanical tap changer, in which case it would receive the operating orders from the protection and control module.

As indicated, unlike the grounding systems of the state of the art, which are connected to the neutral of the substation transformer, the device of the invention is connected to ground through the dedicated transformer, with Ynyn connection. The ground connection may not be permanent, but be regulated by the protection and control module and the load cut-off element.

Another difference is that the device can be connected in a substation, such as grounding, but it can also be connected in the middle of a line.

Unlike other power electronics systems, the control is independent per branch and the system includes an output transformer with Ynyn connection group, with or without additional windings, to have control per phase not only on the converter side but also on the network side.

The device for fault extinction and predictive maintenance in high-voltage networks of the invention has two modes of operation:

- Without control of the zero sequence voltage. This case occurs when the load cut-off element, which may be a grounding switch, of the Ynyn transformer neutral is open, so that the HV zero sequence system depends on the HV system grounding, either by means of grounding elements placed for this purpose or by means of the line's own capacitive.
- With control of the zero sequence voltage. In this case, the zero sequence voltages on the HV side are controlled by the three-phase power converter.

The ability to generate the necessary voltages for fault extinction or maintenance work makes it possible to choose the moment in which it occurs. Said choice allows the device, and therefore also a user thereof, to decide to carry out the different functions related to the protection of high-voltage electrical distribution facilities and to carry out corrective, preventive and predictive maintenance of said facilities, which are defined below:

1) Detection of a single-phase fault with the device on standby

This situation occurs in those configurations of use of the device when it is connected to a line, either stopped or performing other functions not related to the fault extinction. At that time, the loads are connected to the distribution network, with the corresponding grounding system thereof, so the converter does not control the zero sequence voltage. The detection of the single-phase fault is carried out by the appearance of a zero sequence voltage on the HV side, a common technique that is not novel.

Once a single-phase fault is detected, the existing protections in the substation disconnect the line from the network, leaving it powered by the three-phase converter.

2) Detection of a single-phase fault with the system powering the protected network.

This circumstance would occur when the device is powering the line or lines that make up the protected network and these are disconnected from the distribution network, so the three-phase converter controls the voltages of said protected network.

The detection of a single-phase fault is carried out in different ways, depending on whether the three-phase converter is controlling the zero sequence voltage:

- Without control of the zero sequence voltage: The detection of the single-phase fault is carried out by the appearance of a zero sequence voltage on the HV side.
- With control of the zero sequence voltage. Single-phase fault detection is carried out by identifying the resistive component of the electric arc and the point of the fault that gives rise to the supply of active power by the converter to the zero sequence network.

The latter is calculated from the voltage of the phase (*Vphase_fault*) that has the fault and the zero-sequence current provided by the converter (IN)

$$\left| Vphase\_fault * IN \right| > \left| PN\_threshold \right|$$

Wherein *PN_threshold* is a preset threshold power, set by the user.

3) Extinguishing a single-phase fault

The extinction of the single-phase fault is carried out by reducing the voltage of the faulty phase by means of the device for fault extinction in high-voltage networks, which increases the voltages of the healthy phases, while modifying the angle thereof so that the three-phase converter supplies a normal phase-to-phase voltage. This means that the three-phase converter injects a voltage with the direct sequence necessary to power the loads, to which it adds a zero sequence voltage that reduces or even eliminates the voltage of one phase.

The voltage reduction must be sufficient to extinguish the fault, which is verified by calculating the active power supplied by the phase to the zero-sequence network |*Vphase_fault* * IN| > |*PN_threshold*|.

Once the disappearance of the fault has been detected, the voltage can be normalised after an adjustable time or progressively, dynamically checking that the value is not exceeded*PN_threshold.*

4) Extinguishing a polyphase fault

The device also enables the extinction of polyphase faults, by means of a voltage reduction, either permanent or temporary, of the voltages in the affected phases. For this, the three-phase converter has a current limiting module, by automatically reducing the output voltage when an overcurrent is detected.

In the case of three-phase faults, this involves a reduction of the direct sequence voltage. The reduction of the two-phase voltages involves the injection of a reverse sequence voltage by the three-phase converter.

These circumstances can be maintained as long as the voltages supplied to customers are within the legally established supply quality limits, and the current supplied by the three-phase converter can be kept below the maximum current of the three-phase converter.

5) Maintenance mode

The control of voltages per phase enables phase-to-phase overvoltages to be generated, maintaining the supply voltage between phases. This makes it possible to check the state of the insulation of a phase, maintaining the voltage between phases and, therefore, the supply to customers. Like the extinction of faults by reducing voltage in one phase, this is carried out by simultaneously injecting direct sequence voltage and zero sequence voltage, although in this case the zero sequence voltage has the opposite angle, thereby producing the increase in voltage in one phase and the decrease and an angle change in the other two.

**DESCRIPTION OF THE DRAWINGS**

To complement the description that is being made and for the purpose of helping to better understand the features of the invention according to a preferred practical exemplary embodiment thereof, a set of drawings is attached as an integral part of said description in which the following is depicted in an illustrative and non-limiting manner:

Figure 1.- shows a schematic representation of the device for fault extinction and predictive maintenance in high-voltage networks, object of the invention.

Figures 2A and 2B.- show a simplified single-line diagram of a possible connection of the device in the middle of the bi-directional system, formed by two converters that can be powered from one line and perform the extinguishing and maintenance functions of the other.

**PREFERRED EMBODIMENT OF THE INVENTION**

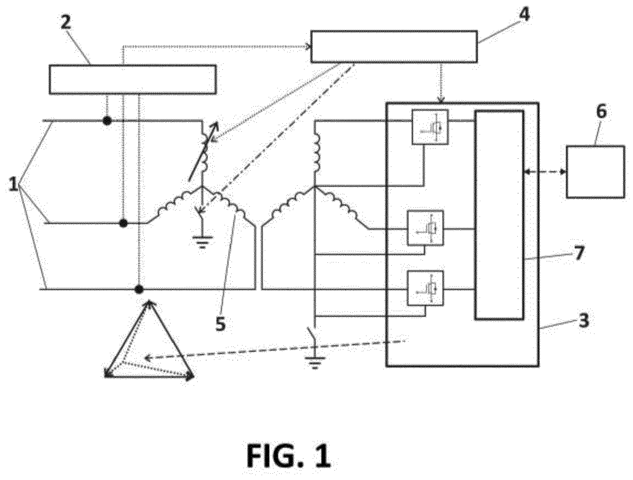

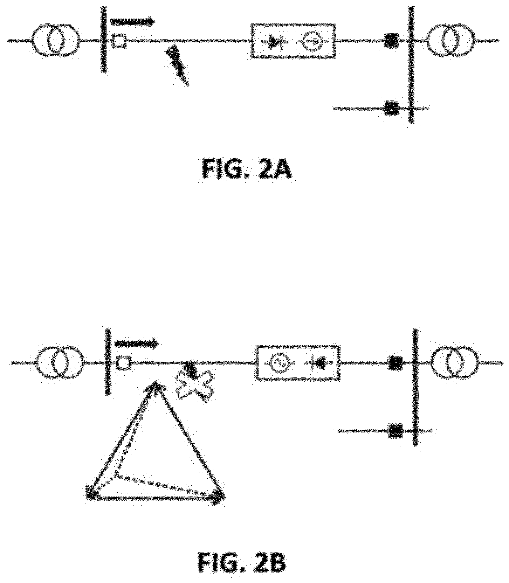

A preferred embodiment of the device for fault extinction and predictive maintenance in high-voltage distribution networks is described below, with the aid of Figures 1, 2A and 2B.

Figure 1 shows a schematic representation of the device of the invention, which, as represented, is intended to be connected to a high-voltage network (1). The device comprises:

- at least one voltage capture element and at least one current capture element (2) for each phase of the high-voltage network (1), said voltage and current capture elements (2) being intended to be connected to the phases of the high-voltage network (1) to obtain one or more of the following measurements:

  - V1, V2 and V3: phase to ground voltages on the HV side,
  - I1, I2 and I3: phase currents on the HV side,
  - IN: neutral current on the HV side,

- a protection and control module (4), connected to the voltage and current capture elements (2), which receive at least some of the captured quantities (V1, V2, V3, I1, I2, I3 and IN),
- a three-phase converter (3) that may or may not be grounded, and three branches with independent control intended to be connected to the phases of the high-voltage network (1). The three-phase converter (3) is also linked to the protection and control module (4), and operates as a voltage source, with the output thereof supplying the high-voltage network (1). The three-phase converter (3) is configured to generate three voltages the values of which can be independent, being calculated by the protection and control module (4), and inject them into the high-voltage network (1), and
- a dedicated transformer (5), with a high-voltage side (HV) and a low voltage side (LV), and with Ynyn connection group, with the neutral connected to ground on the HV side, either permanently or in a controlled way by means of a switch, and with the LV side connected to the neutral of the three-phase converter (3). The dedicated transformer (5) is associated with the protection and control module (4), and comprises a load cut-off element. Additionally, the dedicated transformer (5) can have on-load voltage regulation by means of an electromechanical tap changer, marked with an arrow in Figure 1, in which case it would receive the operating orders from the protection and control module (4).

As indicated, the protection and control module (4) is connected and controls the dedicated transformer (5) and the three-phase converter (3) with the aim of:

- detecting the presence of a fault in the high-voltage network (1),
- regulating the voltages of the phases of the high-voltage network (1) according to the requirements:

  ▪ no fault: normal stresses,
  ▪ with single-phase fault: voltage reduction in the faulty phase and maintenance of voltages between phases,
  ▪ with polyphasic fault: with current limitation, by temporarily reducing the voltage between the affected phases.

Control per phase is carried out by giving different operating instructions for each phase. In terms of device capabilities, it must be capable of meeting the following conditions:

- same frequency for all three phases,
- module that can be different in each phase, and
- angles that may not be equidistant (may not have 120° between each phase).

Additionally, the object of the present invention is a method for fault extinction and predictive maintenance in high-voltage networks, which makes use of the device described. The method comprises the steps of:

- obtaining, in the protection and control module (4), the voltage and current data of each of the phases of the high-voltage network (1),
- determining, in the protection and control module (4), the voltages (angles and modules) to be applied to each phase of the high-voltage network (1) depending on the measured voltage and current data:

  ○ no fault (normal state, no extinction or maintenance functions): It maintains a voltage that only has a direct sequence and a module corresponding to the voltage to be maintained,
  ○ with a phase-to-ground fault: A zero sequence voltage with the appropriate quantity and angle is added to the direct sequence voltage, required to supply the customers. This results in an imbalance, as shown in Figure 2B, which affects phase-ground voltages but not phase-phase voltages. This simultaneously enables a reduction of the voltage in the faulty phase and the maintenance of the supply voltage. It is necessary to previously identify the faulty phase, for which a protection algorithm based on the voltage and current measurements of the network is used,
  ○ with a fault between phases: an inverse sequence voltage is added to the positive sequence, so that the voltage between the two phases in which the fault has been identified is reduced,
  ○ for maintenance functions: the operation is analogous to that described for a fault to ground, except that the zero sequence voltage that is injected is in the opposite direction to that of extinction, which produces a controlled overvoltage in a phase that enables the insulation of the network to be checked.

- injection of the determined voltages corresponding to each phase.

Specifically, Figure 2 shows the fault extinction process, in one of the most complex possible configurations, in this case with the device for fault extinction and predictive maintenance connected in the middle of a line powered by both ends. It is assumed that initially it is transferring energy from left to right, so the left side operates as a rectifier, the right as an inverter in current source configuration. The process begins with the appearance of a fault which involves:

- Figure 2A:

  ○ the detection of the fault by the network protections, which are not the object of the invention, and which will lead to the opening of the switch on the left side in a few tens of milliseconds,
  ○ in automatic operation, wherein it is intended to avoid any interruption of supply, a fault detection would also be carried out by the device for fault extinction,
  ○ in manual operation, the device of the invention would be waiting for an order to act,

- Figure 2B: in either of the two cases (automatic or manual)

  ○ the device for fault extinction powers the isolated section, which means that it receives energy from the healthy network (right side) or alternatively from another energy source, such as a storage system, which involves a change in operation to voltage source on the faulty side,
  ○ the device for fault extinction introduces an imbalanced voltage. In this case, a voltage reduction in one phase, the one with the fault, is represented, with maintenance of voltage between phases, which involves the injection of a zero sequence voltage.

Furthermore, to take advantage of all the functionality that the device of the invention can provide, it has a user interface by means of which all the information it obtains is collected, the data it uses is updated, its operation is defined and the status of the whole device is checked.

The interface can include a set consisting of a keyboard, screen and communications port for the connection of a data terminal equipment and/or data communication system, including software that enables the user to obtain data on the operation of the device, obtain its operating parameters and program the parameters.

In order to be able to leave the device for fault extinction in high-voltage networks out of service, either due to operating criteria or possible failures therein, it can include a manoeuvring element or by-pass switch connected in parallel with the terminals of the fault extinguishing device.

The device can be contained in a single casing, or in separate casings depending on the dimensions or other physical requirements of the system.

**Claims**

1. Fault extinguishing and predictive maintenance device for high-voltage networks, comprising:

   - at least a voltage capture element and at least a current capture element (2) intended to be connected to the phases of a three-phase high-voltage network (1), the voltage and current capture elements (2) being configured to obtain one or more of:

     - V1, V2 and V3: phase to ground voltages,
     - I1, I2 and I3: phase currents,
     - IN: neutral current,

   - a three-phase converter (3), comprising a neutral and three branches with independent voltage control, intended to be connected and inject independent voltages to the phases of the high-voltage network (1),
   - a power supply module (6) of the three-phase converter (3),
   - a dedicated transformer (5), with a star-star configuration (Ynyn), with a first neutral on a high-voltage side and a second neutral on a low voltage side, the neutral on the high-voltage side being connected to ground and the neutral of the low voltage side connected to the neutral of the three-phase converter (3), and
   - a protection and control module (4), connected to the voltage and current capture elements (2), receiving at least some of the captured quantities (V1, V2, V3, I1, I2, I3 and IN), and additionally connected to the dedicated transformer (5) and to the three-phase converter (3), the protection and control module (4) being configured to calculate the independent voltages to be injected by the three-phase converter (3).

2. The device of claim 1, wherein the voltage and current capture elements (2) are conventional voltage transformers and current transformers.

3. The device of claim 1, wherein the protection and control module (4) is an IED (Intelligent Electronic Device).

4. The device of claim 1, wherein the three-phase converter (3) additionally comprises current limiting modules linked to each phase of the high-voltage network (1).

5. The device of claim 1, wherein the power module (6) consists of a second three-phase converter.

6. The device of claim 1, wherein the power module (6) are energy storage batteries.

7. The device of claim 1, wherein the neutral of the high-voltage side of the dedicated transformer (5) is permanently grounded.

8. The device of claim 1, wherein the dedicated transformer (5) further comprises a switch intended to be connected between the neutral of the high-voltage side and ground.

9. The device of claim 1, wherein the dedicated transformer (5) additionally comprises a load cut-off element, for the regulation thereof.

**10.** The device of claim 1, further comprising a user interface connected to the protection and control module (4).

**11.** A method for fault extinction and maintenance in high-voltage networks, which makes use of the device of any of the preceding claims, and which comprises the steps of:

- obtaining, in the protection and control module (4), voltage and current data of each of the phases of the high-voltage network (1),
- determining, in the protection and control module (4), the status of the high-voltage network (1) and the voltages to be applied to each phase of the high-voltage network (1), the possible statuses and voltages to be applied being:

  ∘ no fault: maintenance of a voltage with direct sequence and module corresponding to the voltage to be maintained,
  ∘ with a phase-to-ground fault: a zero sequence voltage with the appropriate quantity and angle is added to the direct sequence voltage to correct the fault,
  ∘ with a fault between phases: an inverse sequence voltage is added to the direct sequence voltage, so that the voltage between the two phases in which the fault has been identified is reduced, and
  ∘ for maintenance functions: a zero sequence voltage in the opposite direction to that of extinction is added to the direct sequence voltage, and

- injection of the determined voltages corresponding to each phase.

**Amended claims in accordance with Rule 137(2) EPC.**

**1.** Fault extinguishing and predictive maintenance device for high-voltage networks, comprising:

- at least a voltage capture element and at least a current capture element (2) intended to be connected to the phases of a three-phase high-voltage network (1), the voltage and current capture elements (2) being configured to obtain one or more of a group of quantities comprising:

  - V1, V2 and V3: phase to ground voltages,
  - I1, I2 and I3: phase currents,
  - IN: neutral current,

- a three-phase converter (3), comprising a neutral and three branches with independent voltage control, intended to be connected and inject independent voltages to the phases of the high-voltage network (1),
- a power supply module (6) of the three-phase converter (3),
- a transformer (5), with a star-star configuration (Ynyn), comprising a high voltage side intended to be connected to the phases of the three-phase high-voltage network (1) being a first neutral on the high-voltage side connected to ground and additionally comprising the transformer (5) a low voltage side connected to the branches of the three-phase converter (3), being a neutral of the low voltage side connected to the neutral of the three-phase converter (3), and
- a protection and control module (4), connected to the voltage and current capture elements (2), receiving at least some of the captured quantities (V1, V2, V3, I1, I2, I3 and IN), and additionally connected to the transformer (5) and to the three-phase converter (3), the protection and control module (4) being configured to calculate the independent voltages to be injected by the three-phase converter (3).

**2.** The device of claim 1, wherein the voltage and current capture elements (2) are conventional voltage transformers and current transformers.

**3.** The device of claim 1, wherein the protection and control module (4) is an IED (Intelligent Electronic Device).

**4.** The device of claim 1, wherein the three-phase converter (3) additionally comprises current limiting modules linked to each phase of the high-voltage network (1).

**5.** The device of claim 1, wherein the power module (6) consists of a second three-phase converter.

6. The device of claim 1, wherein the power module (6) are energy storage batteries.

7. The device of claim 1, wherein the neutral of the high-voltage side of the transformer (5) is permanently grounded.

8. The device of claim 1, wherein the transformer (5) further comprises a switch intended to be connected between the neutral of the high-voltage side and ground.

9. The device of claim 1, wherein the transformer (5) additionally comprises a load cut-off element.

10. The device of claim 1, further comprising a user interface connected to the protection and control module (4).

11. A method for fault extinction and maintenance in high-voltage networks, which makes use of the device of any of the preceding claims, and which comprises the steps of:

- obtaining, in the protection and control module (4), voltage and current data of each of the phases of the high-voltage network (1),
- determining, in the protection and control module (4), the status of the high-voltage network (1) and the voltages to be applied to each phase of the high-voltage network (1), the possible statuses and voltages to be applied being:

  ◦ no fault: maintenance of a voltage with direct sequence and a module corresponding to the voltage to be maintained,
  ◦ with a phase-to-ground fault: a zero sequence voltage is added to the direct sequence voltage to correct the fault,
  ◦ with a fault between phases: an inverse sequence voltage is added to the direct sequence voltage, so that the voltage between the two phases in which the fault has been identified is reduced, and
  ◦ for maintenance functions: a zero sequence voltage in the opposite direction to that of extinction is added to the direct sequence voltage, and

- injection of the determined voltages corresponding to each phase.

FIG. 1

FIG. 2A

FIG. 2B

Europäisches
Patentamt

European
Patent Office

Office européen
des brevets

# EUROPEAN SEARCH REPORT

Application Number

EP 21 38 2794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/182467 A1 (CROSS ANDREW [GB] ET AL) 18 July 2013 (2013-07-18) | 1,2,7,11 | INV.<br>H02H3/16 |
| A | * paragraph [0042] – paragraph [0063]; figure 22 *<br>* paragraph [0100] – paragraph [0110]; figure 5 * | 3-6,8-10 | H02H9/08 |
| Y | US 2011/032739 A1 (JUHLIN LARS-ERIK [SE]) 10 February 2011 (2011-02-10) | 1,2,7,11 | |
| A | * paragraph [0040]; figure 3 * | 3-6,8-10 | |
| A | US 2019/097418 A1 (CHOWDHURY RITWIK [CA] ET AL) 28 March 2019 (2019-03-28)<br>* paragraph [0054] – paragraph [0055]; figure 7 *<br>* paragraph [0083] – paragraph [0089]; figure 11 * | 1-11 | |

TECHNICAL FIELDS
SEARCHED (IPC)

H02H
H02J

The present search report has been drawn up for all claims

| Place of search | Date of completion of the search | Examiner |
|---|---|---|
| Munich | 10 March 2022 | Lindquist, Jim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2794

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2022

| Patent document cited in search report | | Publication date | Patent family member(s) | | Publication date |
|---|---|---|---|---|---|
| US 2013182467 | A1 | 18-07-2013 | EP | 2534742 A1 | 19-12-2012 |
| | | | US | 2013182467 A1 | 18-07-2013 |
| | | | WO | 2011098117 A1 | 18-08-2011 |
| US 2011032739 | A1 | 10-02-2011 | AT | 507605 T | 15-05-2011 |
| | | | EP | 2181499 A1 | 05-05-2010 |
| | | | US | 2011032739 A1 | 10-02-2011 |
| | | | WO | 2009026968 A1 | 05-03-2009 |
| US 2019097418 | A1 | 28-03-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10307668 B3
- ES 2538455 T3